# EUROPEAN PATENT APPLICATION

(11) **EP 2 397 985 A1**
(43) Date of publication of application: **21.12.2011**
(21) Application number: 11169613.4
(22) Date of filing: 10.06.2011
(51) Int. Cl.: G06Q 30/00

(54) **System for multi-modal data mining and organization via elements, clustering and refinement**

(30) Priority: 15.06.2010 US 816314
(71) Applicant: Honeywell International Inc., Morristown, NJ 07962-2245 (US)
(72) Inventor: Guralnik Valerie, Mound, MN 55364 (US); Schloegel, Kirk, Minneapolis, MN 55419 (US)
(74) Representative: Buckley, Guy Julian

(57) **Abstract**

A system for obtaining data from various sources. The data may be organized into cluster sets of related items. Elements of various kinds may be pulled from the data. The elements may be put together into sets of clusters for each kind of elements. The clusters may be refined relative to one another and in view of integrated properties of the cluster sets. Elements may be added or removed from the clusters during refinement. Examples of the elements may be people and events. Examples of cluster sets of such elements may be groups and goals, respectively.

## Description

### Background

The invention pertains to drawing information from various kinds of databases, and particularly the invention pertains to organizing the information. More particularly, the invention pertains to discovery of further information from organizing it.

### Summary

The invention is a system for obtaining data from various sources. The data may be organized into different types of cluster sets. Each cluster set may have one or more clusters of related items. Elements of various kinds may be pulled from the data. The elements may be put together into one or more clusters for each kind of elements. The clusters may be refined relative to one another and in view of integrated properties of the clusters together. Elements may be added or removed from the clusters during refinement. Examples of the elements may be people and events. Examples of clusters of such elements may be groups and goals, respectively.

### Brief Description of the Drawing

Figure 1 is a flow diagram of clustering and refinement of items from various databases;
Figure 2 is a diagram of a system for clustering;
Figure 3 is a diagram of a number of cluster sets greater than two in contrast to the two cluster sets of people and events in Figure 2;
Figure 4 is a diagram showing a sample of integrated optimizations of the cluster sets shown in the diagram of Figure 3;
Figure 5 is a diagram of a matrix of terms representing numerous persons and events, along with symbols representing goals being clusters of events and symbols representing groups being clusters of people;
Figure 6 is a diagram showing of clustering aspects of people and events; and
Figure 7 is a diagram of an ontological example of an approach for unification of disparate networks relative to key elements and their ontological links.

### Description

One way to understand the huge amount of data available from current sources (e.g., the internet, C4ISR video and text data, auto-collected cyber-security data, and so on) is to organize data into groups of related items (a.k.a., cluster sets). Cluster sets can model a wide range of real-world networks such as hostile collaboration networks or social networks, news stories on a given topic, related commercial items that have some security implication, and so forth. Fast, scalable and effective cluster set discovery can improve situational awareness as well as cyber and physical security.

Because of a disparity of the data sources, it is significant to understand who are the actors in the environment (i.e., node disambiguation) and what are the goals being achieved by them. In light of node disambiguation being a challenge, data from multiple sources may be tied together with quantitative probabilities (at best), qualitative probabilities (still useful), similarity values (difficult to integrate), and/or no measure of confidence.

There may be a chicken-and-egg issue. To improve results, goal-based event analysis may inform group discovery. It may enable discovery of "disconnected" members of the group who regularly contribute to completion of shared goals (e.g., a dead drop participant). Similarly, group analysis should inform goal discovery. It may enable discovery of goals for which the associated events are distributed across the different members of a group. So an issue is which comes first, that is, the discovery of the groups or discovery of the goals.

Multi-way network analysis may be effected. An observation is that people working towards the same set of goals may leave a patterned event signature, since the events needed to achieve these goals may be similarly distributed over the set of people working towards them.

A present solution may be based on the observation in that people groups and goals need to be discovered simultaneously while also informing each other. A multi-way approach may incorporate the following. One may start with a single group containing all people and many event singleton clusters. Then one may iteratively split people groups and merge event clusters, while conditioning each splitting/joining system on the other. An extension of the multi-way clustering approach may, for instance, be empirically shown to improve the clustering quality of documents in an information retrieval domain.

The present approach may be summarized in the following. First, there may be clustering events into goals. The clustering may be guided by an ontology of goals. That may mean to group only those events that can satisfy a goal. Second, one should find the most likely set of goals being satisfied. Events from the same goal cluster may connect people nodes suggesting that those people belong to the same social group (i.e., working towards a common goal).

Third, one may partition a network of people into social groups. One may find or seek groups of people working towards the same goal while simultaneously disambiguating their identities. The finding or seeking may be based on node similarity and/or equivalence probability ties (node disambiguation), and based on social relationships (common goal recognition). Groups of people may be connected through events suggesting that those events are used to satisfy the same goal. Once social groups are determined, one may disambiguate nodes within the social groups based on "similarity" measures but also informed by group membership. This is because any two given actors are more likely to be the same person if they are both acting towards the same goal compared to if they are acting towards different or conflicting goals. The latter may result in a smaller issue to solve.

Goals and intents of actors and groups may be determined from a wide range of data sources. One may cluster events to result in goals and cluster people to result in groups.

A summary of relevant experience may be noted. One area of focus may include node disambiguation and group detection. This area may involve who the actors are in the environment and a video surveillance domain. There may be multi-objective graph partitioning for node disambiguation and group discovery. Another area may include activity detection. A question may be what the goals, being achieved by actors, are in the environment. A Scyllarus tool may provide goal-centric reasoning in the cyber network domain (noted herein).

A system may discover intents of actors and groups from multi-modal data. Multi-modal data may be from a wide range of sources which incorporate video, internet, reports of interviews, observations, investigations, documents, and so on. For instance, the actors may be people who want to attack the U.S. or not attack it. These actors may be clustered into groups that have a common intent. There may be two groups which arise from such situation.

Events that are documented in multi-modal data may be clustered into goals. One goal may be to attack the U.S. Examples of events may be an attack on a U.S. Army unit, missiles hitting a U.S. embassy, and a U.S. radio station being jammed. One or more of these events could be clustered into another goal, e.g., jamming. One or more people may likewise be clustered into more than one group.

The system may refine or improve the group or goal clustering. It may iteratively refine a group or goal by taking the other type of cluster sets into account. For instance, one may take the goal of intent to drive U.S. forces out of a foreign country. This goal may be one of a group of people. However, data may show a person contributing to the goal but is not in the group or has no contact with the group. Yet this person may be put into the group (i.e., clustering).

In another way, a person of a group, who is not contributing to a goal of the group, can be removed from the group. Events or occurrences may have several explanations resulting in their being associated with several goals. This may be regarded as goal-based event analysis leading to group discovery. One may look to the intent of the actors of the events or occurrences to determine the goal and the corresponding group having that goal. In another way, a discovery of goals for which associated events are distributed across various members of a group, may be regarded as a group analysis that informs goal discovery.

Network analysis as indicated herein may include group activity detection. A modularity measure may express the difference between the actual and expected interactions/events of individuals within each social group. The measure may be shown to be a superior heuristic used to identify groups of people over a cut size. The present approach may provide good scalable modularity-based partitioning algorithms. A previous approach may be one or more orders of magnitude slower than cut-based partitioning for a data set with 10,000 nodes. The present approach may handle uncertainty regarding node disambiguation, in that uncertainty-tolerant formulations for key clustering algorithms may be developed. The present multi-objective optimization framework may account for a similarity of tracks (to identify actors in the environment) and a level of activity with each group of individuals working towards the same goal.

There may be reasoning over disparate sources. Networks may exist to transfer, aggregate, coordinate, or destroy information, physical assets, money, and so on, via relationships/transactions that vary in type (e.g., digital or physical), direction, size, frequency, and so forth, between entities such as individuals, organizations, legal structures, and so on, that have goals such as shared/conflicting, and so on. An ontology may link these elements and allow reasoning over static/dynamic network information, common or conflicting goals, common owners/actors, shared assets, and more.

Models exist that may be unified to incorporate, but not be limited to, cyber network attack detection, and transportation and financial networks. Goals may be an essential unifying element in that they naturally cross-domain and are temporally persistent, more so than agents, individuals and organizations. Diverse groups may cooperate and/or compete around goals.

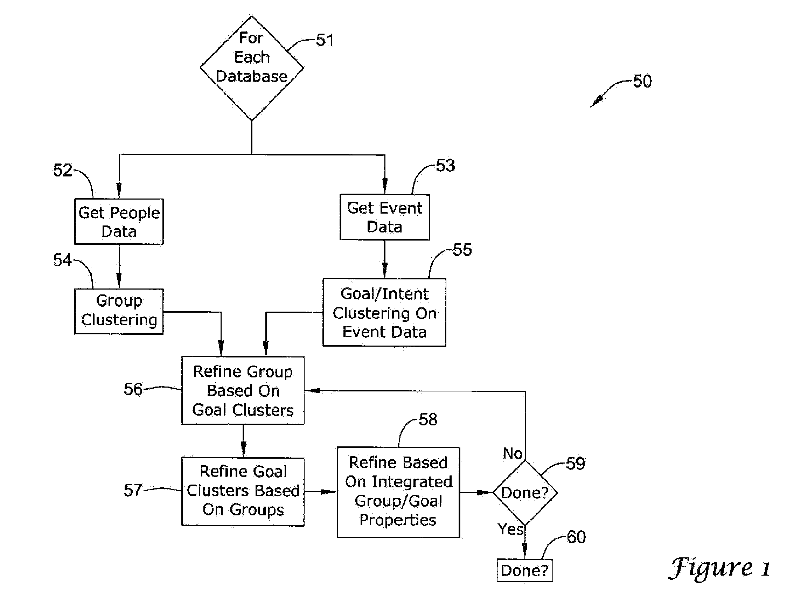

Figure 1 is a flow diagram 50 for computing multiple types of cluster sets and refinement of items from various databases. From each of a number of databases 51, such as financial, social, video, and so forth, at symbol 51, people data may be obtained at symbol 52. Event data may be obtained from databases 51 at symbol 53. Group clustering at symbol 54 may be applied to people data at symbol 52. Goal/intent clustering at symbol 55 may be applied to event data at symbol 55. The clustered group or groups may be refined based on goal clusters at symbol 56. The goal/intent clusters maybe refined based on groups clusters at symbol 57. The clustering may be refined based on integrated group/goal properties at symbol 58. A question at symbol 59 is whether further refinement is needed or desired. If the answer is yes, then one may loop through the activities at symbols 56, 57, 58 and 59 to obtain such refinement. This loop may be iterative until the needed or desired refinement is achieved. Once such refinement is reached, then the approach may be completed at symbol 60.

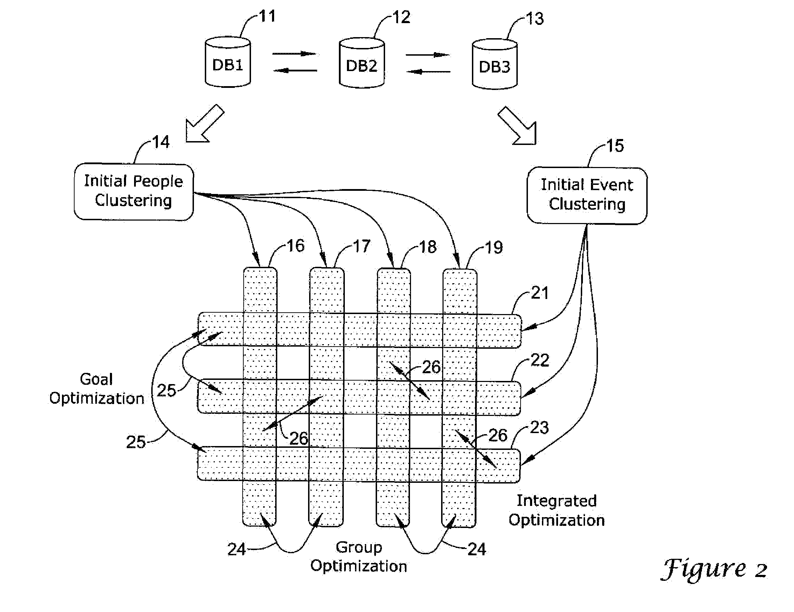

Figure 2 is a diagram of a system for clustering. Multi-modal data may be obtained from data bases 11, 12 and 13, which contain various kinds of information such as, for example, social net, and financial and video data, respectively. There may be an initial people clustering from the information at symbol 14 according to some trait, characteristic, circumstance, location, time, or other item in the data. There may be an initial event clustering at symbol 15 according to some trait, characteristic, circumstance, location, time, or other item in the data. The people clustering may result in a number of groups and the event clustering may result in a number of goals. The number of groups or goals may be other than those in the noted examples.

Groups 16, 17, 18 and 19 may result from clustering of people according to location, profession, social organization, and financial relationship, respectively. Other criteria may be used as a basis for clustering. Goals 21, 22 and 23 may result from clustering of events according to attacking the U.S., raising money for a charity, and building a financial business, respectively. The groups and goals may form a grid resulting in a 2-dimensional matrix 27. Other criteria may be used as a basis for clustering.

There may be optimization of groups with a movement of people from one group to another as indicated by lines 24. For instance, a mother of children who are terrorists may not be a terrorist herself. She may be moved from the group to which she was clustered, due to being a mother of some in the group to another group, which may be a church organization. She may also be moved out to no group to into multiple groups simultaneously dependent upon her properties and the properties of the groups.

There may be an optimization of goals with a movement of events from one goal to another as indicated by lines 25. For instance, an event of raising money may be in the goal of raising the money for a charity but actually the money to be raised is for supporting terrorists. The event may be removed from the goal of raising money for a charity to the goal of attacking the U.S. The event may also be moved out of all goals or moved into multiple goals simultaneously dependent upon the event and goal properties.

There may be integrated optimization. Groups and goals may be optimized relative to each other. People and events may both be changed as indicated by lines 26 to better refine the groups and corresponding goals. For example, if the mother of children who are terrorists has been associated to an event of raising money, during integrated optimization, she might be moved out of the terrorist group and at the same time the event of raising money might be moved out of the raising money for supporting terrorism goal.

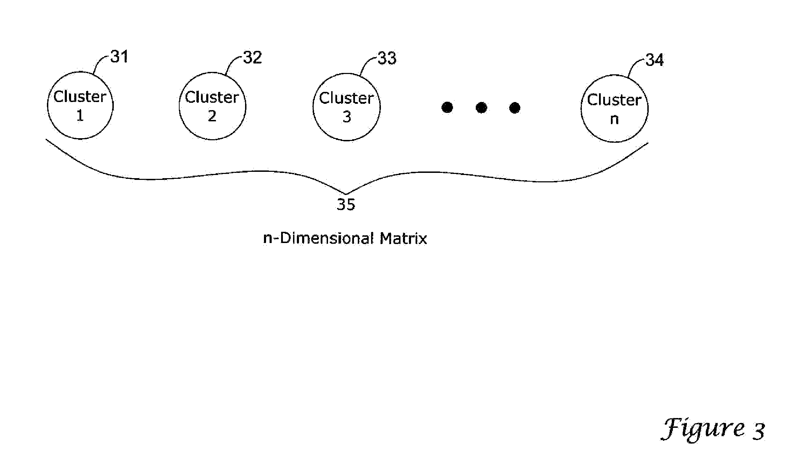

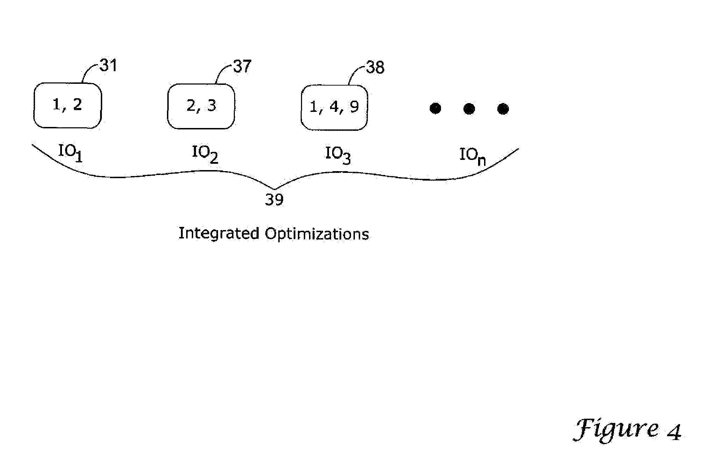

Figure 3 is a diagram of a number of cluster sets 1 through n (31, 32, 33, 34) in contrast to the two cluster sets of people and events in Figure 2. The cluster sets may have many kinds of items. The result of all cluster sets may be an n-dimensional matrix 35. The clusters of the matrix may be subject to various integrated optimizations 39, as shown in a diagram of Figure 4. There may be an integrated optimization 36 of clusters 1 and 2, an optimization 37 of clusters 2 and 3, and an optimization 38 of clusters 1, 4 and 9.

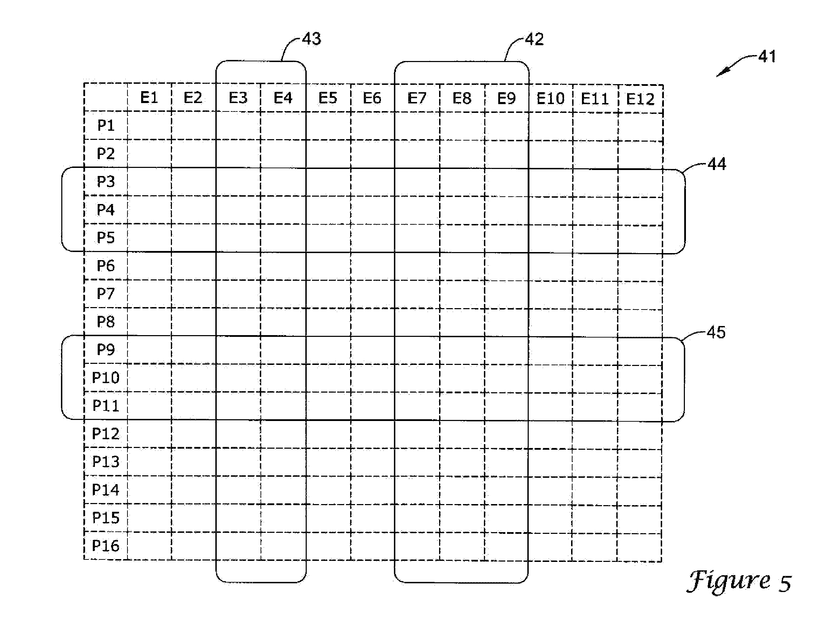

Figure 5 is a diagram of a matrix 41 of persons P1 through P16 and events E1 through E12. Symbol 42 may represent a goal which is a cluster of events E7 - E9. Symbol 43 may represent a goal which is a cluster of events E3 and E4. The events of these clusters may be associated with people from the same set of groups. Symbol 44 may represent a group which is a cluster of people P3 - P5. Symbol 45 may represent a group which is a cluster of people P9 - P11.

There may be groups with people or members who are associated with similar sets of events. Ideally, a desire would be to cluster events associated with people from meaningful sets of groups, and cluster groups with members who are associated with meaningful sets of events.

Groups may be clustered based upon their members that are associated with instances of events. This may result in meaningful classes of groups. Events may be clustered based upon aggregated people association with the meaningful classes of groups noted herein. This may result in meaningful classes of events. Groups may be clustered based upon aggregated membership associations of the meaningful classes of events noted herein. This may result in clusters of groups whose members are associated with meaningful sets of events.

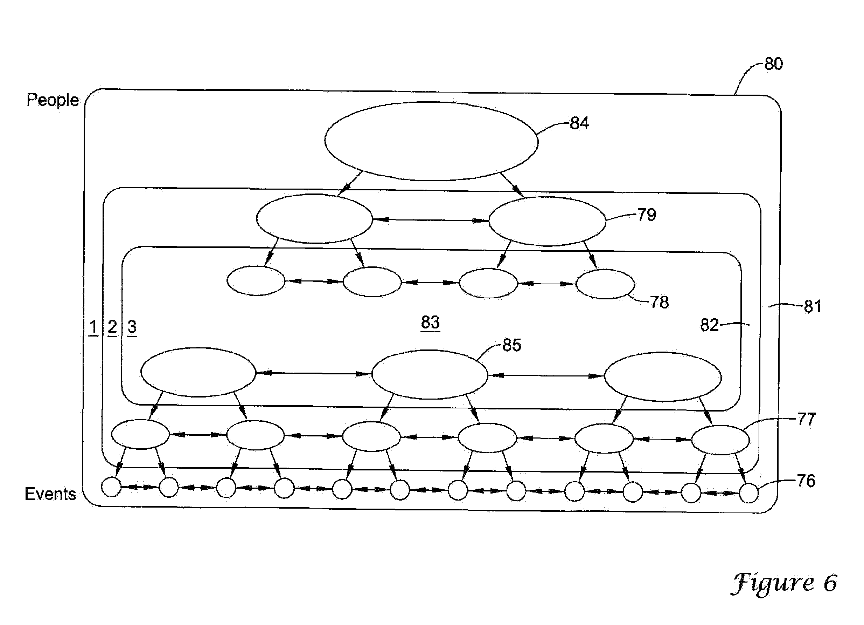

Figure 6 is a diagram 80 of a system where a beginning of clustering with all people and all events. Initial clustering of people may start with one group of all people as indicated by symbol 84. Through optimization, the group of symbol 84 may be clustered into two groups represented by symbols 79 by splitting particular clusters in 84. Further clustering may result in four groups represented by symbols 78. On the other end of the diagram are symbols 76 representing twelve goals of one event each. The symbols 76 may indicate an initial clustering of goals. Further clustering may result in six goals as represent by symbols 77 by merging particular clusters from 76. These goals may each have several events. Clustering of the goals represented by symbols 77 may result in three goals as represented by symbols 85.

Diagram 80 shows the incremental clustering solutions of people 84 and events 85 at, for example, three hierarchic levels 81, 82 and 83. If one discovers "high quality" groups of people, one can obtain "better quality" groups of events satisfying a common goal. At each step or level, one may maximize a mutual clustering quality measure similar to a mutual information measure in an information retrieval domain. Diagram 80 may be an instantiation of the approach shown in Figure 1.

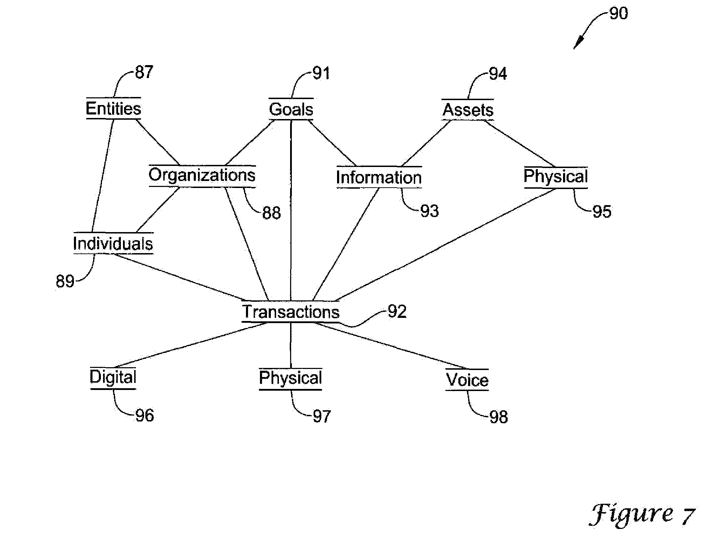

Figure 7 is a diagram 90 of an ontological example of an approach for unification of disparate networks relative to key elements and their ontological links. These elements and links may be common, though not necessarily so, to the disparate networks. There may be entities 87, for instance, linked to organizations 88 and individuals 89. Goals 91 may be linked to organizations 88, transactions 92 and information 93. Assets 94 may be linked to information 93 and physical type 95. Organizations 88 may be linked to individuals 89 and transactions 92. Individuals 89 may be linked to transactions 92. Information 93 may be linked to transactions 92. Transactions 92 may be linked to digital type 96, physical type 97 and voice type 98. There may be other items and links added or removed from diagram 90. The invention may use ontology similar to diagram 90 of Figure 7 but more complex to automatically reason about how diverse networks interact and/or share common attributes. These may form the basis for different types of clustering sets of for different integrated optimizations as illustrated in Figure 4.

An example of a tool which may provide goal-centric reasoning over cyber network ontology may be a computer network security tool (CNST). In a particular example, framework architecture may apply incorporate, use or otherwise be associated with a modified version of SCYLLARUS^{™} (Scyllarus) by Honeywell International Inc. (See U.S. Patent Application No. 12/547,415, filed August 25, 2009.) Scyllarus may be regarded as a CNST. The CNST may be described and referred to herein in conjunction with the present approach and system. Other kinds of tools may be used as a CNST. As a particular example, the framework architecture may apply Bayesian logic to cyber events (such as network-based intrusion detection) and to events associated with other networks (such as non-computer networks) in order to cluster cyber events into goals. As another particular example, the framework architecture can be used to determine if two or more graphs are related, such as by using probabilities that various nodes in each graph are equivalent.

The following applications may be relevant. U.S. Patent Application No. 12/547,415, filed August 25, 2009, and entitled "Framework for Scalable State Estimation Using Multi Network Observations", is hereby incorporated by reference. U.S. Patent Application No. 12/369,692, filed February 11, 2009, and entitled "Social Network Construction Based on Data Association", is hereby incorporated by reference. U.S. Patent Application No. 12/187,991, filed August 07, 2008, and entitled "System for Automatic Social Network Construction from Image Data", is hereby incorporated by reference. U.S. Patent Application No. 12/124,293, filed May 21, 2008, and entitled "System Having a layered Architecture for Constructing a Dynamic Social Network from Image Data", is hereby incorporated by reference.

In the present specification, some of the matter may be of a hypothetical or prophetic nature although stated in another manner or tense.

Although the present system has been described with respect to at least one illustrative example, many variations and modifications will become apparent to those skilled in the art upon reading the specification. It is therefore the intention that the appended claims be interpreted as broadly as possible in view of the prior art to include all such variations and modifications.

## Claims

1. A method for using data, comprising:
obtaining data from each source of multi-modal sources (11, 12, 13);
organizing the data into cluster sets (31, 32, 33, 34) of related items;
drawing out 1^{st} through n^{th} elements from the related items;
clustering the 1^{st} through n^{th} elements into 1^{st} through n^{th} cluster sets (31, 32, 33, 34), respectively; and
refining each cluster of the 1^{st} through n^{th} cluster sets (31, 32, 33, 34) based on the other cluster sets (31, 32, 33, 34).

2. The method of claim 1, further comprising refining each cluster based on integrated properties of the 1^{st} through n^{th} cluster sets (31, 32, 33, 34).

3. The method of claim 2, wherein if further refinement of the cluster sets (31, 32, 33, 34) is sought, then the method further comprises:
refining each cluster of the 1^{st} through n^{th} cluster sets (31, 32, 33, 34) based on the other cluster sets (31, 32, 33, 34); and
refining each cluster based on integrated properties of the 1^{st} through n^{th} cluster sets (31, 32, 33, 34).

4. The method of claim 1, wherein one or more elements can be clustered into one or more other clusters.

5. The method of claim 1, further comprising disambiguating identities of the elements within each cluster based on the other 1^{st} to n^{th} cluster sets (31, 32, 33, 34).

6. The method of claim 1, wherein:
an element can be removed from one or more clusters according to properties of the element; and
an element can be added to one or more clusters according to properties of the element

7. The method of claim 1, wherein:
1^{st} elements comprise events (E1-E12);
1^{st} cluster sets (31, 32, 33, 34) comprise goals;
2^{nd} elements comprise actors; and
2^{nd} cluster sets (31, 32, 33, 34) comprise groups.
